Europäisches Patentamt

European Patent Office

Office européen des brevets

(11) Veröffentlichungsnummer: **0 241 748**
**A2**

## (12) EUROPÄISCHE PATENTANMELDUNG

(21) Anmeldenummer: **87104046.5**

(22) Anmeldetag: **19.03.87**

(51) Int. Cl.⁴: **A01B 63/111**

(30) Priorität: **16.04.86 DE 3612763**

(43) Veröffentlichungstag der Anmeldung:
**21.10.87 Patentblatt 87/43**

(84) Benannte Vertragsstaaten:
**DE FR GB IT**

(71) Anmelder: **ROBERT BOSCH GMBH**
**Postfach 50**
**D-7000 Stuttgart 1(DE)**

(72) Erfinder: **Höfer, Friedrich-Wilhelm, Dipl.-Ing.**
**Georg-Friedrich-Händel-Weg 6**
**D-7257 Ditzingen 5(DE)**

(54) **Elektrohydraulische Hubwerk-Regeleinrichtung.**

(57) Es wird eine elektrohydraulische Hubwerks-Regeleinrichtung für ein an einem Traktor (10) angelenktes Arbeitsgerät (12) vorgeschlagen, bei der als Regelgrößen neben dem Schlupf des Traktors (10) die unmittelbar am Arbeitsgerät (12) von einem Taster (25) ermittelte Arbeitstiefe (26) dienen. Beim Überschreiten ungewollter Schlupfwerte wird die Arbeitstiefe (26) entsprechend der Schlupfzunahme stetig verringert. Die einfach bauende Einrichtung ermöglicht konstante Arbeitstiefen und vermeidet zugleich ein Festfahren des Traktors (10).

EP 0 241 748 A2

## Elektrohydraulische Hubwerks-Regeleinrichtung

Stand der Technik

Die Erfindung geht aus von einer elektrohydraulischen Einrichtung zum Regeln eines an einem Hubwerk eines landwirtschaftlichen Arbeitsfahrzeugs angelenkten Arbeitsgeräts nach der Gattung des Hauptanspruchs. Es ist schon eine solche Hubwerks-Regeleinrichtung aus der DE-OS 26 47 077 bekannt, bei der ein Traktor mit einer Schlupfregelung ausgerüstet ist, die als zusätzliche Regelgröße einen Lageeinfluß verarbeitet, um die Arbeitstiefe des Pfluges zu begrenzen. Der Abgriff der Lage erfolgt hier über einen Sensor, der die relative Lage eines den Pflug tragenden Hubwerksarmes zwischen dem Gehäuse des Traktors abgreift. Die Genauigkeit der mittelbaren Erfassung der Arbeitstiefe ist in vielen Anwendungsfällen unzureichend, insbesondere bei großen Arbeitsgeräten und unebenem Gelände. Außerdem werden Tiefenänderungen, die sich bei Schlupfzunahme durch Eingraben der Triebräder ergeben, bei Lageregelung nicht erfaßt. Zudem gibt es neben dem Pflug andere Arbeitsgeräte, z.B. auch solche, die in einem bestimmten Abstand über oder auf dem Boden zu führen sind, für die sich eine Lageregelung nicht eignet. Gerade bei Geräten, die auf der Bodenoberfläche zu führen sind, besteht insbesondere bei unebenem und weichem Boden die Gefahr des Festfahrens. Da ferner eine Schlupfregelung an einem Traktor für sich allein eine relativ insta bile Arbeitsweise ergibt, muß versucht werden, eine genaue und stabile Arbeitsweise durch den Einfluß der zusätzlichen Regelgröße zu erzielen.

Ferner ist aus der DE-AS 11 71 664 ein Traktor mit einer Hubwerks-Regeleinrichtung bekannt, die zur Erzielung einer konstanten Arbeitstiefe mit einem am Pflug angebrachten Taster arbeitet. Bei dieser nach hoher Wirtschaftlichkeit strebenden Regeleinrichtung werden zusätzliche Parameter als Regelgrößen verarbeitet, wozu in einem Hydrogetriebe das Übersetzungsverhältnis automatisch verstellbar ist und die Leistung des Fahrzeugmotors über die Kraftstoffeinspritzmenge geregelt wird. Mit dieser Einrichtung lassen sich zwar eine konstante Arbeitstiefe und hohe Wirtschaftlichkeit erreichen, wobei zugleich ein Festfahren des Traktors vermieden wird; diese Einrichtung hat aber den Nachteil, daß sie sehr aufwendig baut und damit teuer ist. Für eine Reihe von Anwendungsfällen ist sie daher nicht geeignet.

Vorteile der Erfindung

Die erfindungsgemäße elektrohydraulische Einrichtung zum Regeln eines an einem Hubwerk angelenkten Arbeitsgeräts mit den kennzeichnenden Merkmalen des Hauptanspruchs hat demgegenüber den Vorteil, daß sie bei minimalem Aufwand ein besonders einfach bauendes, die Arbeitstiefe genau regelndes und vor einem Festfahren des Arbeitsfahrzeugs schützendes Regelsystem ermöglicht. Dabei ist das Regelsystem auch für Arbeitsgeräte anwendbar, die mittels Taster auf oder über der Bodenoberfläche zu führen sind und bei denen ein störungsfreier Betrieb auch bei unebener Bodenoberfläche und weichem Boden sicherzustellen ist.Sie eignet sich daher besonders für große Anbaugeräte und zur Anwendung bei anderen Arbeitsgeräten als dem Pflug. Ferner wird mit ihr eine teuere Zugkraftmeßeinrichtung eingespart, so daß sie relativ billig zu realisieren ist.

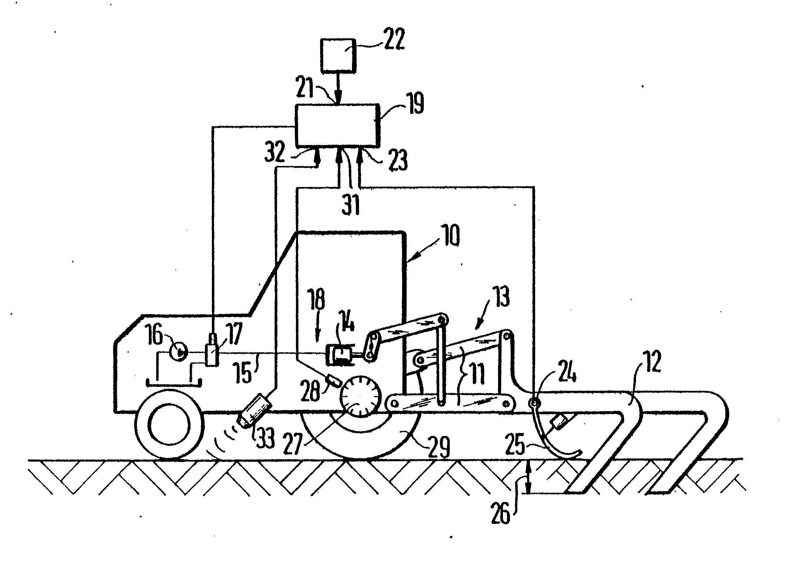

Durch die in den Unteransprüchen aufgeführten Maßnahmen sind vorteilhafte Weiterbildungen und Verbesserungen der im Hauptanspruch angegebenen Einrichtung möglich. Eine besonders vorteilhafte und wirksame Arbeitsweise ergibt sich, wenn die Regelgrößen Schlupf und Arbeitstiefe nach der im Anspruch 4 näher angegebenen Weise verarbeitet werden. Äußerst zweckmäßig ist ferner eine Anwendung der erfindungsgemäßen Einrichtung bei einem Rübenroder nach Anspruch 7. Weitere vorteilhafte Ausgestaltungen ergeben sich aus der Beschreibung und der Zeichnung.

Zeichnung

Ein Ausführungsbeispiel der Erfindung ist in der Zeichnung dargestellt und in der nachfolgenden Beschreibung näher erläutert. Die einzige Figur zeigt in vereinfachter Darstellung einen Traktor mit einer erfindungsgemäßen elektrohydraulischen Einrichtung zum Regeln eines am Hubwerk angelenkten Pfluges.

Beschreibung des Ausführungsbeispiels

In der einzigen Figur ist als landwirtschaftliches Arbeitsfahrzeug ein Traktor 10 dargestellt, an dem heckseitig über ein übliches Dreipunktgestänge 11 als Arbeitsgerät ein Pflug 12 angelenkt ist.

Das Dreipunktgestänge 11 ist Teil eines Hubwerks 13, das von einem hydraulischen Kraftheber 14 betätigt wird und dadurch den Pflug 12 in seiner Höhenlage verstellen kann. Der Kraftheber 14 liegt in einem hydraulischen Kreis 15 mit Pumpe 16 und elektrohydraulischen Regelventil 17. Regelventil 17, Kraftheber 14 und Hubwerk 13 bilden zugleich Teile einer elektrohydraulischen Hubwerks-Regeleinrichtung 18.

Das Regelventil 17 wird von einem als Regler arbeitenden elektronischen Steuergerät 19 angesteuert, das auch in Mikroprozessortechnik ausgeführt sein kann. Diesem Steuergerät 19 werden an einem ersten Eingang 21 die Signale eines Sollwertgebers 22 eingegeben. Ein zweiter Eingang 23 am Steuergerät 19 steht miteinem Tastsensor 24 in Wirkverbindung, der unmittelbar am Pflug 12 angeordnet ist. Dieser Tastsensor 24 weist einen auf dem Boden schleifenden Taster 25 auf, dessen Drehlage sich relativ zur Arbeitstiefe 26 des Pfluges 12 ändert, so daß der Tastsensor 24 von der Arbeitstiefe des Pfluges 12 abhängige Signale an das Steuergerät 19 meldet. Der angetriebenen Hinterachse 27 des Traktors 10 ist ein Drehzahlgeber 28 zugeordnet, dessen Signale ein Maß für die Antriebsgeschwindigkeit des schlupfbehafteten Hinterrades 29 sind. Dieser Drehzahlgeber 28 steht mit einem dritten Eingang 31 des elektronischen Steuergeräts 19 in Verbindung. Ein vierter Eingang 32 des Steuergeräts 19 erhält Signale von einem Radarsensor 33, dessen Signale ein Maß für die absolute Geschwindigkeit des Traktors 10 über dem Boden ergeben.

Die Wirkungsweise der elektrohydraulischen Regeleinrichtung wird wie folgt erläutert, wobei auf deren Funktion nur soweit eingegangen wird, als zum Verständnis der Erfindung notwendig ist.

Mit Hilfe des Sollwertgebers 22 kann die Bedienungsperson für die Regelgrößen Schlupf und Arbeitstiefe bestimmte Sollwerte vorwählen und dem elektronischen Steuergerät 19 eingeben. Dabei macht sich die Bedienungsperson die Erkenntnis zunutze, daß ein optimales Pflügen mit dem Traktor 10 dann erreicht wird, wenn ein bestimmter Schlupf von einigen Prozent auftritt und nicht wesentlich überschritten wird.

Im elektronischen Steuergerät 19 wird aus den Signalen des Drehzahlgebers 28 ständig die Antriebsgeschwindigkeit des Hinterrades 29 ermittelt, während die Signale des Radarsensors 33 ein Maß für die tatsächliche Geschwindigkeit des Traktors über Grund ergeben. Aus diesen Signalen der Sensoren 28, 33 errechnet das Steuergerät 19 den jeweils auftretenden Schlupf und vergleicht ihn mit dem vorgegebenen Sollwert für den Schlupf. Ist der am Traktor 10 auftretende Schlupf kleiner als der vorgegebene Sollwert, so steuert das Steuergerät 19 über das Regelventil 17, den Kraftheber 14 und das Hubwerk 13 einen Senkvorgang des Pfluges 12, wodurch die Arbeitstiefe 26 erhöht wird und somit infolge des vergrößerten Bodenwiderstandes auch der Schlupf ansteigt. Die Senkenbewegung des Pfluges 12 wird beendet, wenn die Regelabweichung des Schlupfes den vorgegebenen unteren Grenzwert erreicht. Die Signale des Tastsensors 24 für die Arbeitstiefe 26 können dabei im elektronischen Steuergerät zur Stabilisierung des Schlupf-Regelkreises verarbeitet werden.

Werden dagegen am Traktor 10 von den Sensoren 28, 33 Schlupfwerte ermittelt, welche die voreingestellten Sollwerte für den Schlupf übersteigen, so wird der Tastregelkreis in verstärktem Maße wirksam. Hierbei wird die elektrohydraulische Hubwerks-Regeleinrichtung 18 vom Steuergerät 19 so beeinflußt, daß die Arbeitstiefe 26 entsprechend der Schlupfzunahme stetig verringert wird. Mit dem Ausheben des Pfluges 12 läßt sich der Schlupf verringern und seine Größe in einen zulässigen Bereich zurückführen. Damit lassen sich ein übergroßer Schlupf und darüber hinaus ein Festfahren des Traktors 10 beim Pflügen weitestgehend verhindern.

Zur Vermeidung von ständigen Stellbewegungen des Hubwerks 13 ist es selbstverständlich möglich, im elektronischen Steuergerät 19 insbesondere verstellbar eingebbare Schwellwerte vorzusehen, bei deren Über-bzw. Unterschreiten die Regeleinrichtung erst wirksam wird. Die kombinierte Verarbeitung der Regelgrößen Schlupf und Arbeitstiefe des Anbaugerätes 12 führt zu einer relativ einfach bauenden und wirkungsvoll arbeitenden Regeleinrichtung, die besonders leicht bei vorhandenen Traktoren 10 nachrüstbar ist. Vor allem kann bei dieser Einrichtung eine teuere Meßeinrichtung zur Ermittlung der Zug-bzw. Druckkräfte in den Lenkern des Dreipunktgestänges 11 entfallen. Auch bei großen Anbaugeräten 12 läßt sich die Arbeitstiefe 26 in weiten Bereichen mit hoher Genauigkeit konstanthalten und zugleich ein Festfahren des Traktors 10 verhindern.

Selbstverständlich sind an der gezeigten Regeleinrichtung Änderungen möglich, ohne vom Gedanken der Erfindung abzuweichen. So kann die Regelgröße Schlupf auch über die nicht angetriebene Vorderachse mit einem zugehörigen Drehzahlsensor ermittelt werden. Anstelle des Schlupfsignales kann es auch sinnvoll sein, im elektronischen Steuergerät 19 die Differenzgeschwindigkeit aus den Signalen der Sensoren 28, 33 zu bilden und als Regelgröße zu benutzen. Ferner ist es ohne weiteres möglich, am Anbaugerät 12 auch mehrere Taster 25 vorzusehen und deren Mittelwerte im Steuergerät 19 zu verarbeiten. Ferner kann der Einfluß der Regelgrößen Schlupf und Arbeitstiefe im Steuergerät 19 nach Art einer Mischregelung verstellbar gestaltet werden. Weiterhin ist es möglich, die Regeleinrichtung mit kombinierter Verarbeitung von Schlupf und Arbeitstiefe anstelle dem heckseitigen Hubwerk einem frontseitigen Hubwerk zuzuordnen. Da die erfindungsgemäße Regeleinrichtung auch für Anbaugeräte einsetzbar ist, die auf bzw. über der Bodenoberfläche geführt werden, ist es selbstverständlich, daß unter dem Begriff der Arbeitstiefe stets auch der zu regelnde Abstand des Anbaugeräts über der Bodenoberfläche verstanden wird, der teilweise auch als Arbeitshöhe bezeichnet wird.

## Ansprüche

1. Elektrohydraulische Einrichtung zum Regeln eines an einem Hubwerk eines landwirtschaftlichen Arbeitsfahrzeug angelenkten Arbeitsgeräts, insbesondere eines an einem Traktor angekoppelten Pfluges, mit einem Regelsystem zum Beeinflussen der Lage des Hubwerks, wozu im Regelsystem mindestens ein Sollwertgeber sowie Sensoren zur Ermittlung wenigstens zweier, im Regelsystem zu verarbeitender Regelgrößen angeordnet sind, von deren Signalen abhängig über eine insbesondere elektrische Einrichtung und eine hydraulische Ventileinrichtung ein das Hubwerk betätigender hydraulischer Motor gesteuert wird, wobei eine der Regelgrößen aus schlupfabhängigen Signalen der Sensoren gebildet wird, dadurch gekennzeichnet, daß als zweite Regelgröße die unmittelbar am Arbeitsgerät (12) ermittelte Arbeitstiefe (26) benutzt wird.

2. Einrichtung nach Anspruch 1, dadurch gekennzeichnet, daß sie dem heckseitigen Hubwerk (13) des Arbeitsfahrzeugs (12) zugeordnet ist.

3. Einrichtung nach Anspruch 1, dadurch gekennzeichnet, daß sie einem frontseitigen Hubwerk des Arbeitsfahrzeugs zugeordnet ist.

4. Einrichtung nach Anspruch 1,2 oder 3, dadurch gekennzeichnet, daß zur Ermittlung der Arbeitstiefe ein Tastsensor (24, 25) angeordnet ist.

5. Einrichtung nach einem der Ansprüche 1 bis 4, dadurch gekennzeichnet, daß zur Ermittlung der Arbeitstiefe berührungslos arbeitende Tastsensoren angeordnet sind.

6. Einrichtung nach einem oder mehreren der Ansprüche 1 bis 5, dadurch gekennzeichnet, daß im Regelsystem ein elektronisches Steuergerät (19) angeordnet ist, das bei Überschreiten eines vorgegebenen Schlupfwertes die Arbeitstiefe (26) entsprechend der Zunahme des Schlupfes stetig verringert.

7. Einrichtung nach einem oder mehreren der Ansprüche 1 bis 6, dadurch gekennzeichnet, daß im Regelsystem neben den Regelgrößen Schlupf und Arbeitstiefe (26) zusätzliche Parameter verarbeitet werden.

8. Einrichtung nach Anspruch 7, dadurch gekennzeichnet, daß als zusätzlicher Parameter die Belastung des Motors im Arbeitsfahrzeug für eine Grenzlastregelung verwendet wird.

9. Einrichtung nach einem der Ansprüche 1 bis 8, dadurch gekennzeichnet, daß zur Stabilisierung der Regeleinrichtung (18) die Änderungsgeschwindigkeit der Arbeitstiefe (26) mit verarbeitet wird.

10. Einrichtung nach einem der Ansprüche 1 bis 9, gekennzeichnet durch deren Verwendung bei Arbeitsgeräten, die auf oder über der Bodenoberfläche geführt werden müssen, insbesondere einem Rübenroder.